# EUROPEAN PATENT SPECIFICATION

(11) **EP 2 101 234 B1**
(45) Date of publication and mention of the grant of the patent: **01.03.2017**
(21) Application number: 09003123.8
(22) Date of filing: 04.03.2009
(51) Int. Cl.: G05B 19/409, G05B 19/418

(54) **Plant information display apparatus and method**
Vorrichtung und Verfahren zur Anzeige von Betriebsinformationen
Appareil et procédé d'affichage d'informations d'entreprise

(30) Priority: 10.03.2008 JP 2008059642
(43) Date of publication of application: 16.09.2009
(73) Proprietor: Yokogawa Electric Corporation, Tokyo 180-8750 (JP)
(72) Inventor: Iga, Ryotatsu, Musashino-shi Tokyo 180-8750 (JP)
(74) Representative: Grünecker Patent- und Rechtsanwälte PartG mbB

(56) References cited:
- US-A1- 2002 077 711
- US-A1- 2003 028 269
- US-A1- 2004 054 660
- US-A1- 2004 139 085
- US-A1- 2005 197 803

## Description

### BACKGROUND OF THE INVENTION

### Technical Field

The present disclosure relates to a plant information display apparatus and plant information display method. More particularly, the present disclosure relates to a plant information display apparatus and plant information display method which display information related to plant data on a screen by selectively using a plurality of kinds of softwares having mutually different display styles.

### Related Art

A plant utilizes a large number of equipment data and process data. Also, a large number of tools are available for performing functions required for process operations using such data. When any operation related to plant operations is to be performed, the operator activates a corresponding tool, and performs an operation of designating data or the like, thereby acquiring a display screen and the like required for the operation (*see, e.g.,* JP-A-2007-264861)

In the related-art system, however, functions required for the operations are incorporated in a distributed manner in various tools, and therefore complicated operations are required for reaching a target operation. In order to activate the tool for the target action, moreover, it is necessary to perfectly know distributed menus and locations of execution files. In the respective tools, arguments to be applied for startup and manners of operation are implemented according to original specifications. In some tools, for example, it is necessary to manually input a startup argument, so that the operations require some learning and skills.

Document US 2003/028269 A1 describes an industrial plant asset management system that is capable of displaying a plurality of information related to industrial plants and sub-units thereof in various ways, such as bar graphs, plots, trend graphs, etc. Plants and sub-units thereof are made available for selection by means of a hierarchical tree-like view in the portion of a display screen.

### SUMMARY

Exemplary embodiments of the present invention address the foregoing issues and other issues not described above. However, the present invention is not required to overcome the problems described above and, thus, some implementations of the present invention may not overcome the specific problems described above.

Accordingly, it is an aspect of the present invention to provide a plant information display apparatus and method which have good operability and from which target information can be easily obtained.

This is achieved by the features of the appended claims.

According to one or more aspects of the present invention, there is provided a plant information display apparatus which displays information related to plant data on a screen by selectively using a plurality of kinds of softwares each having a different display style and displaying the plant data. The plant information display apparatus includes: a defining section configured to define correspondence relationships between the plant data and the softwares; a software selection accepting section configured to display a selecting screen for selecting one of the softwares, and accept an operation of selecting said one of the softwares in accordance with an operation on the selecting screen; an extracting section configured to extract the plant data based on the defining section, the plant data being displayed by said one of the softwares; a plant data displaying section configured to expand and display the plant data extracted by the extracting section, in a hierarchical manner; a plant data selection accepting section configured to accept an operation of selecting the plant data on the screen displayed by the plant data display section; and an information displaying section configured to display, on the screen, information related to the plant data selected by the plant data selection accepting section by using said one of the softwares.

According to one or more aspects of the present invention, there is provided a plant information display method of displaying information related to plant data on a screen by selectively using a plurality of kinds of softwares each having a different display style and displaying the plant data. The method includes: (a) defining correspondence relationships between the plant data and the softwares; (b) displaying a selecting screen for selecting one of the softwares, and accepting an operation of selecting said one of the softwares in accordance with an operation on the selecting screen; (c) extracting the plant data based on the correspondence relationships, the plant data being displayed by said one of the softwares; (d) expanding and displaying the plant data extracted in a hierarchical manner; (e) accepting an operation of selecting the plant data on the screen displayed in step (d); and (f) displaying, on the screen, information related to the plant data selected in step (e), by using said one of the softwares selected in step (b).

### BRIEF DESCRIPTION OF THE DRAWINGS

Fig. 1 is a block diagram showing the configuration of a field control system using a plant information display apparatus according to an embodiment of the present invention;
Fig. 2 is a view showing a launch bar displayed on an operation monitoring screen;
Fig. 3 is a view showing a screen that displays a trend graph of a plurality of selected plant data;
Fig. 4 is a view showing a state that a tab of "PLANT" is selected; and
Fig. 5 is a view showing a search screen.

### DETAILED DESCRIPTION OF EXEMPLARY EMBODIMENTS OF THE

### INVENTION

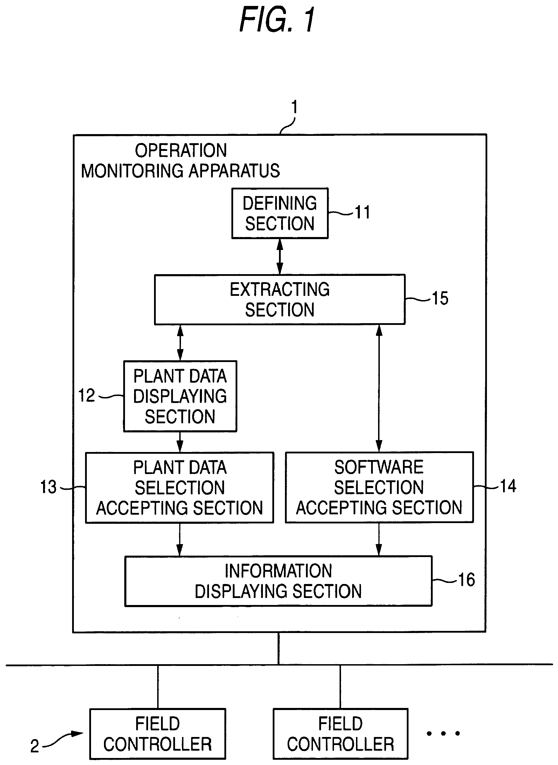

Hereinafter, an exemplary embodiment of the plant information display apparatus of the invention will be described with reference to Figs. 1 to 5.

Fig. 1 is a block diagram showing the configuration of a field control system using the plant information display apparatus according to an exemplary embodiment of the invention.

As shown in Fig. 1, the field control system includes field controllers 2, 2, ... which are disposed in a distributed manner in a plant, and an operation monitoring apparatus 1 which collects plant data of field equipment via the field controllers 2, 2, ..., and then performs operations and monitoring for operating the plant.

As shown in Fig. 1, the operation monitoring apparatus 1 includes: a defining section 11 configured to define correspondence relationships between all of plant data and softwares (tools, menus, and the like) in which the plant data are to be displayed; a plant data displaying section 12 configured to expand and display the plant data in a hierarchical manner; a plant data selection accepting section 13 configured to accept an operation of selecting the plant data on the screen displayed by the plant data displaying section 12; a software selection accepting section 14 configured to display a screen for selecting a specific one of the softwares and then accept the operation of selecting one of the softwares by an operation on the screen; an extracting section 15 configured to extract the software or the plant data based on the defining section 11; and an information displaying section 16 configured to display, on the screen, information related to the plant data selected via the plant data selection accepting section 13 by using the software selected via the software selection accepting section 14.

Next, the display operation in the operation monitoring apparatus 1 will be described.

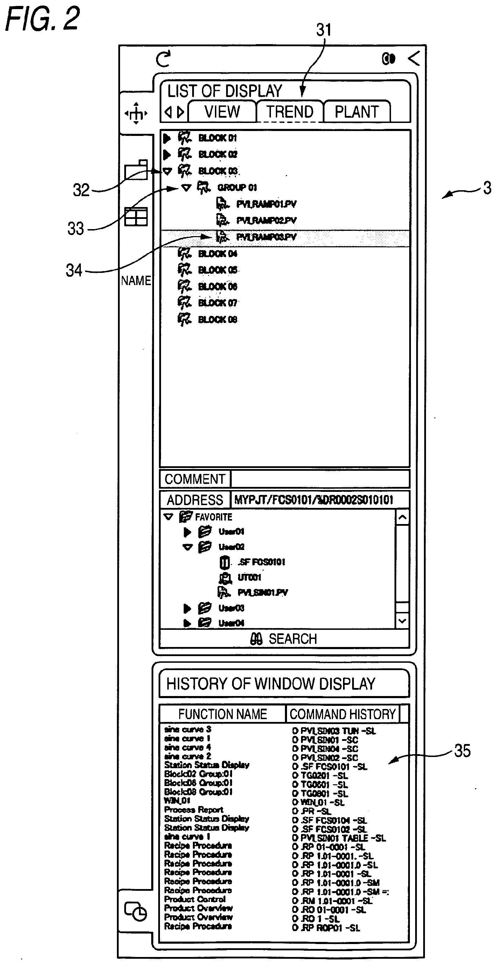

Fig. 2 is a view showing a launch bar 3 displayed on an operation monitoring screen of the operation monitoring apparatus 1. The launch bar 3 is displayed by the plant data displaying section 12 and the software selection accepting section 14. The launch bar 3 makes an intensive list of tools, menus, and the like related to the plant operation. The launch bar 3 is a resident bar on the right or left side of the operation monitoring screen, and automatically minimized except for a time when it is needed, in order not to interfere with the operation of the operator. The tools, menus, and the like are stored in the launch bar 3 as tabs in the unit of function, and can be switched by selecting a tab.

The launch bar 3 functions as a base point of the operation by the operator. When any action related to the plant operation is to be performed, the operator can expand an operation from a tab corresponding to the target action in the launch bar 3. Each node of the launch bar 3 is provided with a function of assigning a function to another function by means of drag and drop, and context menus by which various tools can be automatically activated while omitting an input of startup arguments.

Fig. 2 shows a state that a tab 31 of "TREND" is selected. The "TREND" corresponds to a tool for displaying a trend of the plant data. When the tab 31 of "TREND" is selected, the extracting section 15 extracts plant data which are intended to be displayed as the trend by the tool for the trend display based on the defining section 11, and the plant data displaying section 12 displays the extracted plant data in a tree hierarchical structure.

When the operator operates an icon of plant data displayed in a hierarchical manner, so as to expand and display the plant data, and then selects an icon of specific plant data, the software selection accepting section 14 accepts the operation as an operation of selecting the tool corresponding to the selected tab, and the plant data selection accepting section 13 accepts the operation as an operation of selecting plant data corresponding to the operated icon.

In the example of Fig. 2, "BLOCK 03" is expanded by operating an icon 32, and "GROUP 01" is expanded by operating an icon 33. Thus, the plant data belonging to "GROUP 01" are expanded and displayed. By operating an icon 34, plant data corresponding to a process tag of "PVI_RAMP03.PV" are selected.

In a region 35 of the launch bar 3, a history of operations executed through the launch bar 3 is displayed.

Next, the information displaying section 16 activates the tool selected via the software selection accepting section 14, and displays information related to the plant data selected via the plant data selection accepting section 13, on the screen. In the case of Fig. 2, due to the function of the tool for the trend display, a trend graph of the plant data corresponding to the tag of "PVI_RAMP03.PV" is displayed.

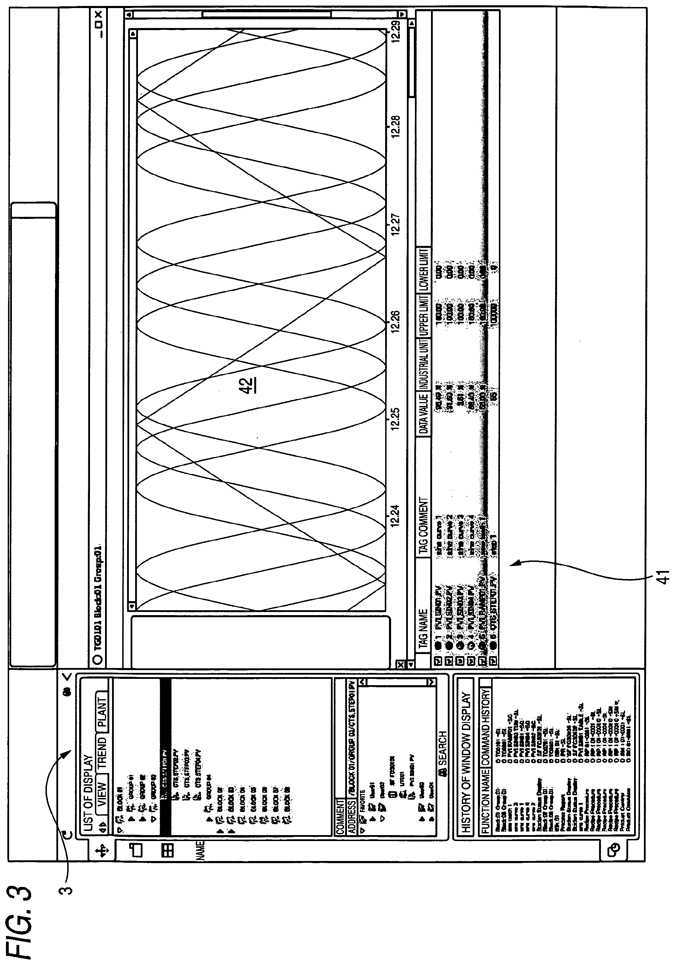

Also, it is possible to select a plurality of plant data and to display a plurality of trend graphs on one screen. Fig. 3 shows a state that the plant data are expanded and displayed by the method described with reference to Fig. 2, and the plant data are selected by copying the icon of the plant data to the region 41 by means of drag and drop. In the example of Fig. 3, a plurality of plant data are selected, and operation results (trend graphs) performed by the tool for trend display of the selected plant data are displayed in a region 42.

As described above, the operator can successively perform designation of tools and that of process tags in the plant, only by operations on the launch bar 3.

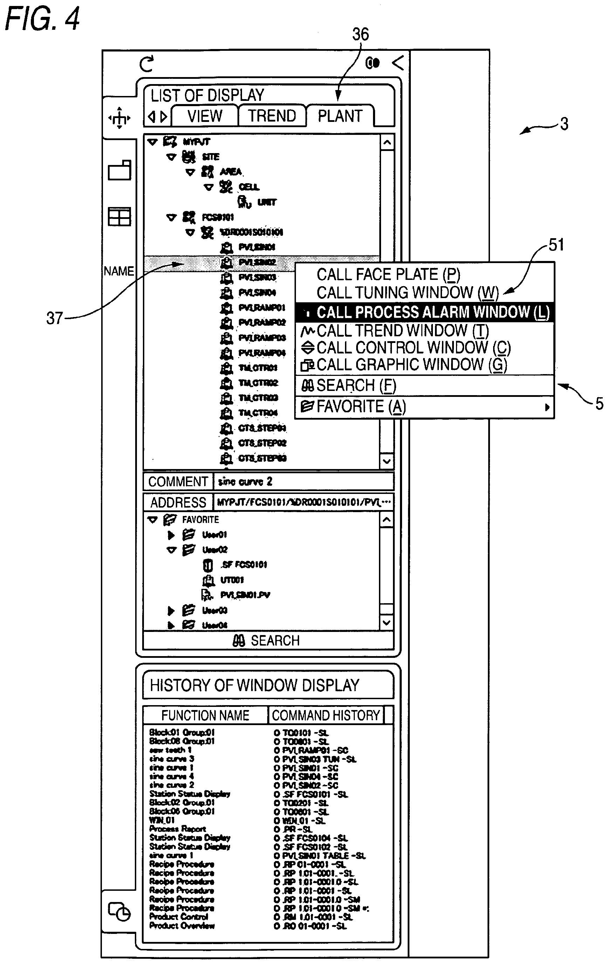

Fig. 4 shows a state that a tab 36 of "PLANT" is selected. When the tab 36 of "PLANT" is selected, the plant data displaying section 12 displays all of the plant data in the plant registered in the defining section 11 in such a manner that the plant data can be expanded in accordance with the tree plant hierarchy. In the example of Fig. 4, after the required expanding operation, the plant data corresponding to a process tag of "PVI_SIN02" is selected by the operation of an icon 37.

When the icon 37 is right-clicked in this state, the software selection accepting section 14 displays a context menu 5 by which various tools can be activated while omitting the input of startup arguments. When the context menu 5 is to be displayed, the extracting section 15 extracts all of the tools available for the selected tag of "PVI_SIN02" based on the defining section 11. The software selection accepting section 14 displays only the extracted tools in the context menu 5.

The software selection accepting section 14 accepts a selection operation which is performed on a tool in the context menu 5 by the operator. In the operation of selecting a tool, the plant data selection accepting section 13 accepts an operation of selecting the corresponding tag, i.e., a process tag corresponding to the icon 37.

Next, the information display means 16 activates the tool selected via the software selection accepting section 14, and displays the information related to the plant data selected via the plant data selection accepting section 13, on the screen.

As described above, the operator can first designate a certain specific process tag in the plant, and then select the tool to be applied. In the case where a parameter is to be adjusted for a specific process tag, for example, the icon of the process tag is right-clicked and the context menu 5 is expanded, and, when an icon 51 is then selected, a tool for parameter tuning (a tuning window) is opened. As described above, in order to successively designate tags in the plant and designate tools, the operator is requested to perform only an operation on the launch bar 3.

As described above, according to the plant information display apparatus of the exemplary embodiment, the callings of various functions which are conventionally distributed in the operation monitoring screen are intensively listed in one launch bar, so that the operation efficiency can be improved.

In addition, plant data can be designated while the data are expanded and displayed in the hierarchical manner, or data can be designated by an operation of drag and drop, or the like, so that it is possible to perform the data access through intuition. Furthermore, a tool can be selected by an operation such as a selection of a tag, or right clocking, so that it is possible to select the tool through intuition. Accordingly, the target information can be easily obtained without requiring any learning for the operation.

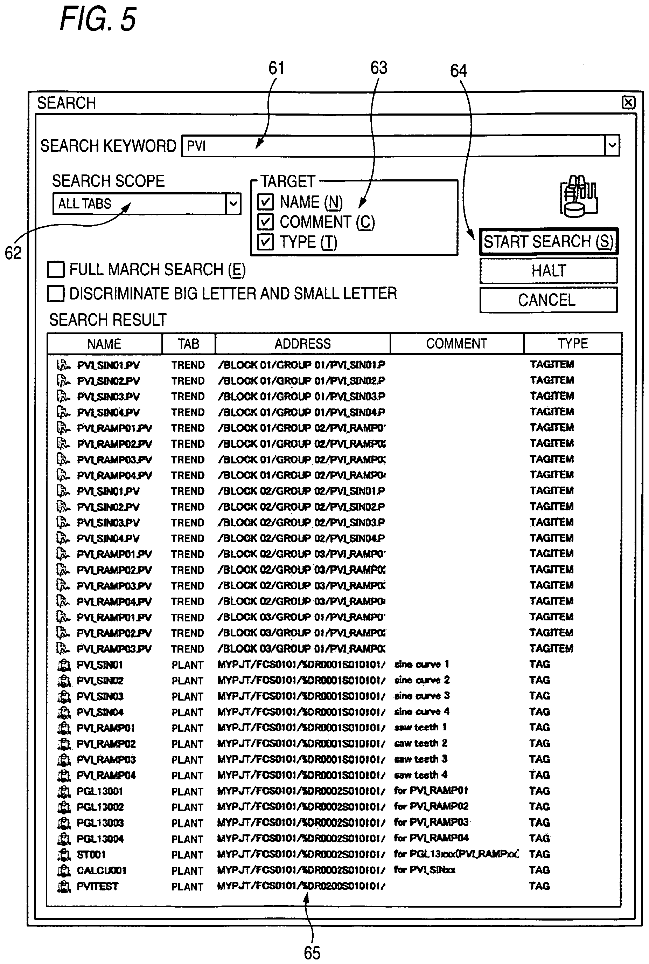

In addition, when all of the process data are registered in the defining section 11, the function of displaying a list of the plant data can be intensively provided for only the launch bar. Therefore, the retrieval of data can be performed for all of the process data in the plant. Fig. 5 shows the search screen. A keyword to be searched is designated in a region 61, an area to be searched is designated in a region 62, and a search object is designated in a region 63. When a search start button 64 is then operated, the process data registered in the defining section 11 are searched, and the data matched with the search conditions are extracted and listed in a region 65.

As described above, in the plant information display apparatus according to exemplary embodiments of the invention, the plant data are expanded and displayed in a hierarchical manner, an operation of selecting plant data on the screen is accepted, a software in which the selected plant data are to be displayed is extracted based on the defined correspondence relationships, a screen for selecting a specific one of the extracted softwares is displayed, and an operation of selecting a software is accepted by an operation on the screen, so that the target information can be displayed through a simple operation. According to the plant information apparatus of the invention, moreover, a screen for selecting a specific one of a plurality of kinds of softwares is displayed, an operation of selecting a software is accepted by an operation on the screen, plant data to be displayed by the selected software are extracted based on the defined correspondence relationships, the extracted plant data are expanded and displayed in a hierarchical manner, and an operation of selecting the plant data on the screen is accepted, so that the target information can be displayed through a simple operation.

The present invention is widely applicable to a plant information display apparatus and method which display information related to plant data by selectively using a plurality of kinds of softwares having mutually different display styles.

## Claims

1. A plant information display apparatus which displays information related to plant data on a screen by selectively using a plurality of kinds of softwares each having a different display style and displaying the plant data, the plant information display apparatus comprising:
a defining section (11) configured to define correspondence relationships between the plant data and the softwares;
a software selection accepting section (14) configured to display a selecting screen for selecting one of the softwares, and accept an operation of selecting said one of the softwares in accordance with an operation on the selecting screen;
an extracting section (15) configured to extract the plant data to be displayed by the software selected in accordance with the operation of the selecting screen, based on the defining section (11);
a plant data displaying section (12) configured to expand and display the plant data extracted by the extracting section (15), in a hierarchical manner;
a plant data selection accepting section (13) configured to accept an operation of selecting the plant data on the screen displayed by the plant data displaying section (12); and
an information displaying section (16) configured to activate said one of the softwares selected via the software selection accepting section (14) and to display, on the screen, information related to the plant data selected by the plant data selection accepting section by using said one of the softwares;
wherein the information displaying section (16) displaying trend graphs related to the selected plant data.

2. A plant information display method of displaying information related to plant data on a screen by selectively using a plurality of kinds of softwares each having a different display style and displaying the plant data, the method comprising:
(a) defining correspondence relationships between the plant data and the softwares;
(b) displaying a selecting screen for selecting one of the softwares, and accepting an operation of selecting said one of the softwares in accordance with an operation on the selecting screen;
(c) extracting the plant data to be displayed by the software selected in accordance with the operation of the selecting screen, based on the correspondence relationships;
(d) expanding and displaying the plant data extracted in a hierarchical manner;
(e) accepting an operation of selecting the plant data on the screen displayed in step (d);
(f) activating said one of the softwares selected in step (b); and
(g) displaying, on the screen, information related to the plant data selected in step (e), by using said software activated in step (f), wherein the displayed information includes trend graphs related to the selected plant data.

## Patentansprüche

1. Vorrichtung zur Anzeige von Pflanzen-Informationen, die Informationen, die sich auf Pflanzen-Daten beziehen, unter selektiver Verwendung einer Vielzahl von Software-Typen auf einem Bildschirm anzeigt, die jeweils einen unterschiedlichen Anzeige-Stil haben und die Pflanzen-Daten anzeigen, wobei die Vorrichtung zur Anzeige von Pflanzen-Informationen umfasst:
einen Teilabschnitt (11) zum Definieren, der so konfiguriert ist, dass er Korrespondenz-Beziehungen zwischen den Pflanzen-Daten und der jeweiligen Software definiert;
einen Teilabschnitt (14) zum Annehmen einer Auswahl von Software, der so konfiguriert ist, dass er einen Auswähl-Bildschirm zum Auswählen einer Software anzeigt und eine Betätigung annimmt, mit der eine jeweilige Software entsprechend einer Betätigung des Auswähl-Bildschirms ausgewählt wird;
einen Extrahier-Teilabschnitt (15), der so konfiguriert ist, dass er die Pflanzen-Daten, die mit der entsprechend der Betätigung des Auswähl-Bildschirms ausgewählten Software anzuzeigen sind, auf Basis des Teilabschnitts (11) zum Definieren extrahiert;
einen Teilabschnitt (12) zum Anzeigen von Pflanzen-Daten, der so konfiguriert ist, dass er die durch den Extrahier-Teilabschnitt (15) extrahierten Pflanzen-Daten erweitert und hierarchisch anzeigt;
einen Teilabschnitt (13) zum Annehmen einer Auswahl von Pflanzen-Daten, der so konfiguriert ist, dass er eine Betätigung zum Auswählen der Pflanzen-Daten auf dem durch den Teilabschnitt (12) zum Anzeigen von Pflanzen-Daten angezeigten Bildschirm annimmt; und
einen Teilabschnitt (16) zum Anzeigen von Informationen, der so konfiguriert ist, dass er die jeweilige über den Teilabschnitt (14) zum Annehmen einer Auswahl von Software ausgewählte Software aktiviert und auf dem Bildschirm Informationen, die sich auf die die durch den Teilabschnitt zum Annehmen einer Auswahl von Pflanzen-Daten ausgewählten Pflanzen-Daten beziehen, unter Verwendung der jeweiligen Software anzeigt;
wobei der Teilabschnitt (16) zum Anzeigen von Informationen Trenddarstellungen anzeigt, die sich auf die ausgewählten Pflanzen-Daten beziehen.

2. Verfahren zur Anzeige von Pflanzen-Informationen, mit dem Informationen, die sich auf Pflanzen-Daten beziehen, auf einem Bildschirm unter selektiver Verwendung einer Vielzahl von Software-Typen angezeigt werden, die jeweils einen unterschiedlichen Anzeige-Stil haben und die Pflanzen-Daten anzeigen, wobei das Verfahren umfasst:
a) Definieren von Korrespondenz-Beziehungen zwischen den Pflanzen-Daten und der jeweiligen Software;
b) Anzeigen eines Auswähl-Bildschirms zum Auswählen einer Software und Annehmen einer Betätigung, mit der die jeweilige Software entsprechend einer Betätigung des Auswähl-Bildschirms ausgewählt wird;
c) Extrahieren der Pflanzen-Daten, die mit der entsprechend der Betätigung des Auswähl-Bildschirms ausgewählten Software anzuzeigen sind, auf Basis der Korrespondenz-Beziehungen;
d) Erweitern und hierarchisches Anzeigen der extrahierten Pflanzen-Daten;
e) Annehmen einer Betätigung zum Auswählen der Pflanzen-Daten auf dem in Schritt d) angezeigten Bildschirm;
f) Aktivieren der jeweiligen in Schritt b) ausgewählten Software; und
g) Anzeigen von Informationen, die sich auf die in Schritt e) ausgewählten Pflanzen-Daten beziehen, auf dem Bildschirm unter Verwendung der in Schritt f) aktivierten Software, wobei die angezeigten Informationen Trenddarstellungen einschließen, die sich auf die ausgewählten Pflanzen-Daten beziehen.

## Revendications

1. Appareil d'affichage d'informations d'entreprise qui affiche sur un écran des informations se rapportant à des données d'entreprise en utilisant sélectivement une pluralité de types de logiciels possédant chacun un style d'affichage différent et en affichant les données d'entreprise, l'appareil d'affichage d'informations d'entreprise comprenant :
une section de définition (11) configurée pour définir des relations de correspondance entre les données d'entreprise et les logiciels,
une section d'acceptation de sélection de logiciel (14) configurée pour afficher un écran de sélection permettant de sélectionner l'un des logiciels, et pour accepter une opération de sélection dudit un parmi les logiciels en fonction d'une opération réalisée sur l'écran de sélection,
une section d'extraction (15) configurée pour extraire les données d'entreprise à afficher par le logiciel sélectionné en fonction de l'opération de l'écran de sélection, sur la base de la section de définition (11),
une section d'affichage de données d'entreprise (12) configurée pour développer et afficher de manière hiérarchique les données d'entreprise extraites par la section d'extraction (15),
une section d'acceptation de sélection de données d'entreprise (13) configurée pour accepter l'opération de sélection des données d'entreprise sur l'écran, affichées par la section d'affichage de données d'entreprise (12), et
une section d'affichage d'informations (16) configurée pour activer ledit un parmi les logiciels sélectionné par l'intermédiaire de la section d'acceptation de sélection de logiciel (14) ainsi que pour afficher, sur l'écran, les informations se rapportant aux données d'entreprise sélectionnées par la section d'acceptation de sélection de données d'entreprise en utilisant ledit un parmi les logiciels,
la section d'affichage d'informations (16) représentant des graphiques de tendances se rapportant aux données d'entreprise sélectionnées.

2. Procédé d'affichage d'informations d'entreprise consistant à afficher des informations se rapportant à des données d'entreprise sur un écran en utilisant sélectivement une pluralité de types de logiciels possédant chacun un style d'affichage différent, et consistant à afficher les données d'entreprise, le procédé comprenant :
(a) la définition de relations de correspondance entre les données d'entreprise et les logiciels,
(b) l'affichage d'un écran de sélection permettant de sélectionner l'un des logiciels, et l'acceptation d'une opération de sélection dudit un parmi les logiciels en fonction d'une opération réalisée sur l'écran de sélection,
(c) l'extraction des données d'entreprise à afficher par le logiciel sélectionné en fonction de l'opération de l'écran de sélection, sur la base des relations de correspondance,
(d) le développement et l'affichage des données d'entreprise extraites de manière hiérarchique,
(e) l'acceptation d'une opération de sélection des données d'entreprise sur l'écran, affichées lors de l'étape (d),
(f) l'activation dudit un parmi les logiciels, sélectionné lors de l'étape (b), et
(g) l'affichage, sur l'écran, d'informations se rapportant aux données d'entreprise sélectionnées lors de l'étape (e) en utilisant ledit logiciel activé lors de l'étape (f), les informations affichées incluant des graphiques de tendances se rapportant aux données d'entreprise sélectionnées.
